# EUROPEAN PATENT APPLICATION

(11) **EP 3 128 332 A2**
(43) Date of publication of application: **08.02.2017**
(21) Application number: 16179343.5
(22) Date of filing: 13.07.2016
(51) Int. Cl.: G01P 3/488

(54) **MAGNETIC SENSING SYSTEM AND METHOD FOR DETECTING SHAFT SPEED**

(30) Priority: 14.07.2015 GB 201512311
(71) Applicant: WESTON AEROSPACE LIMITED, Farnborough Hampshire GU14 7PW (GB)
(72) Inventor: TURNER, Nigel Philip, Farnborough, Hampshire GU14 7PW (GB)
(74) Representative: Ponder, William Anthony John

(57) **Abstract**

A sensing system for sensing rotational speed of a shaft in a gas turbine engine, comprising: a target, the target fixed to the shaft in use, the target comprising at least one ferrous target element radially spaced from the shaft, and a first magnetic probe assembly comprising a first pole piece element and a second pole piece element, wherein the first pole piece element and the second pole piece element are radially spaced from one another so that the at least one ferrous target element passes proximate to and between the first and second pole piece elements as the target rotates, so that radial movement of the at least one ferrous target element away from one of the first and second pole piece elements results in simultaneous and corresponding radial movement of the at least one ferrous target element towards the other of the first and second pole piece elements. By providing pole piece elements that are radially spaced from each other, radial movement of the target away from one pole piece element as a result of eccentric rotation of the shaft is compensated for by corresponding movement of the target towards the other pole piece element, so that the output signal remains stable.

## Description

The invention relates to a system for determining the rotational speed of a shaft. In particular the invention relates to a system for reliably determining the rotational speed of a shaft even when there is some eccentric rotation of the shaft. The system is useful in gas turbine engines, such as jet engines, and in particular may be used in a system for determining if a shaft in the gas turbine engine has broken.

A broken shaft in a gas turbine engine results in the risk of so-called "turbine over-speed". When the shaft of, for example, a jet engine breaks, the compressor mass is lost to the rotating system so the shaft and turbine then rotates significantly more quickly. The movement of the turbine can be sufficiently fast to cause the turbine to fly apart and break. This catastrophic failure can happen very quickly and so it is imperative to be able to detect shaft breakage quickly and reliably.

Variable Reluctance (VR) sensors are often used as part of an over-speed protection system on a gas turbine engine. The purpose of such systems is to stop the engines turbine from over speeding and potentially catastrophically failing in the event of a shaft failure. US4045738A describes one example of a VR sensor.

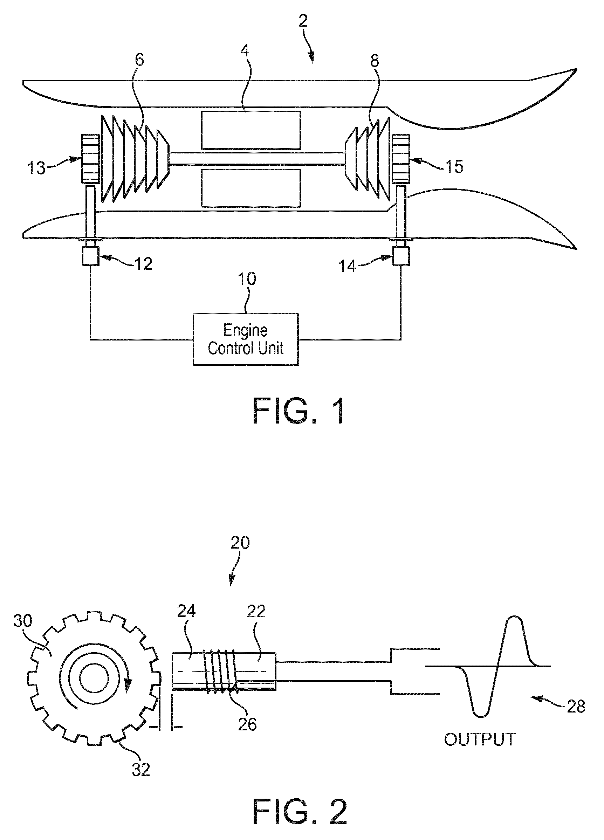

Such a system typically has speed sensors positioned both on the compressor end of the engine shaft and on the turbine end of the same shaft. This arrangement is illustrated schematically in Figure 1. The engine 2 comprises a combustor 4 positioned between a compressor 6 and a turbine 8. The engine control unit 10 is connected to a first sensor 12 at the compressor end of the shaft 16 and to a second sensor 14 at the turbine end of the shaft. The first sensor senses the rotation of a first phonic wheel 13 mounted to the shaft 16 and the second sensor senses the rotation of a second phonic wheel 15 mounted to the shaft. The engine Electronic Control Unit (ECU) monitors the sensor signals from both ends of the shaft to ensure they are synchronous. In the event of a shaft failure, the sensor signals become non-synchronous. This can be detected and the fuel can then be cut off, stopping the turbine over-speeding.

Each of the sensors is a VR sensor. A VR sensor 20 is illustrated schematically in Figure 2. A VR sensor consists of a permanent magnet 22 attached to a pole piece 24, and a coil 26 wound around the pole piece. An output signal 28 is generated when the magnetic field strength within and around the pole piece changes. This is caused by the approach and passing of ferrous metal teeth 32 on a phonic wheel 30 near the pole piece 24. The alternating presence and absence of ferrous metal teeth on the phonic wheel varies the reluctance, or "resistance of flow" of the magnetic field, which dynamically changes the magnetic field strength. This change in magnetic field strength induces a current into a coil winding which is attached to the output terminals. The output signal of a VR sensor is an AC voltage that varies in frequency that is directly proportional to the speed of the monitored target.

One complete waveform (cycle) occurs as each tooth of the wheel passes the sensing area (pole piece) of the sensor. The frequency of the signal, and so the speed of rotation, is determined from the zero crossing times of the signal. But typically the sensor "sinusoidal like" voltage output is required to cross zero volts and reach a minimum voltage either side of zero, for a reliable speed reading to be obtained. This minimum voltage requirement avoids electrical noise causing false readings.

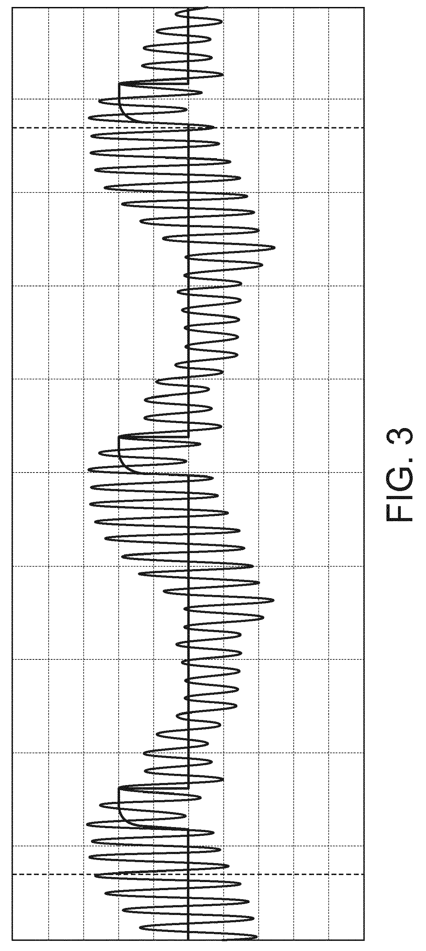

One of the issues encountered using VR sensors in such a system is that in the event of a shaft failure the shaft mounted phonic wheel that excites the VR sensor may run eccentrically, causing distortion and possible loss of the speed signal. Figure 3 shows example of a distorted output plot from an eccentric running phonic wheel. This distortion occurs due to the rapid changes in the air-gap between the sensor and the phonic wheel that occurs during less than one revolution of the phonic wheel. The value of the peak voltage signal increases as the air gap between the sensor and the phonic wheel gets smaller and decreases as the air gap gets larger.

This variation in the actual value of the voltage induced in the coil leads to difficulties in determining the speed of rotation. This is because the voltage either side of a zero crossing may not reach the minimum voltage required for a reliable reading to be obtained. This can cause the ECU to record a loss of the speed signal.

It is an object of the invention to provide a system for sensing the rotational speed of a shaft that is reliable even when the shaft begins to rotate eccentrically relative to the sensor.

The present invention provides a system according to claim 1 and a method according to claim 14. Preferred features are defined in dependent claims 2 to 13.

In a first aspect of the invention there is provided a sensing system for sensing rotational speed of a shaft in a gas turbine engine, comprising:
a target fixed to the shaft, the target comprising at least one ferrous target element radially spaced from the shaft;
a first magnetic probe assembly comprising a first pole piece element and a second pole piece element, wherein the first pole piece element and the second pole piece element are radially spaced from one another so that the at least one ferrous target element passes proximate to the first and second pole piece elements as the target rotates and so that radial movement of a ferrous target element away from one of the first and second pole piece elements results in simultaneous movement of a ferrous target element towards the other of the first and second pole piece elements.

By providing pole piece elements that are radially spaced from each other, radial movement of the wheel away from one pole piece element as a result of eccentric rotation of the shaft is compensated for by corresponding movement of the targetl towards the other pole piece element.

The term "radial" in this context means in a direction orthogonal to the axis of rotation of the shaft and target. The term "axial" means in the direction of the axis of rotation of the target and shaft.

The target may be a wheel and the at least one ferrous target element may be at least one ferrous tooth on the wheel. The wheel may comprise a plurality of ferrous teeth arranged around a circumference of the wheel. Alternatively, the target may be a slotted cylinder. The target provides a circumferential path a portion of which contains ferrous material and a portion of which does not contain ferrous material so that as the target rotates the probe assembly experiences variable magnetic reluctance.

The first magnetic probe assembly may comprise one or more variable reluctance sensors. If the pole piece elements are part of the same magnetic circuit with the same sensor, then the reluctance of the magnetic field is not much changed by eccentric motion of the target and the output of the sensor is stable. If the pole piece elements are in separate sensors, each providing an independent output, the outputs can be combined to provide a stable, compensated signal in which variations due to eccentric rotation are minimal.

In some embodiments, the first magnetic probe assembly comprises a plurality of magnetic probes, wherein each of the first and second pole piece elements is part of a separate magnetic probe. The output of each of the plurality of magnetic probes may be summed or otherwise combined to provide a stable signal from which a measure of the rotational speed of the shaft can be obtained. Each probe may comprises a coil wound around the pole piece element. The coils may be connected to one another in series in order to provide a summed output signal. Alternatively, the coils may be connected in parallel, or the outputs of the coils combined in another way, for example within signal processing circuitry, to provide a stable combined output signal in which variations in voltage due to eccentric rotation of the shaft are smoothed out. The plurality of magnetic probes may share a permanent magnet or may have separate permanent magnets.

In other embodiments, the first and second pole piece elements may be part of a single pole piece. A coil may be wound around the pole piece and an output signal obtained from the coil.

The pole pieces may be arranged relative to the target, and in particular relative to the ferrous target element or elements, in various ways. In some embodiments, the at least one ferrous target element extends in an axial direction away from a body of the target and the first and second pole piece elements are positioned on a same side of the shaft as each other and such that the at least one ferrous target element passes between the first and second pole piece elements as the target rotates. This allows for a compact system as the pole piece elements can be relatively close to one another, with just a small air gap between the pole pieces through which the ferrous target element or elements pass as the shaft rotates.

In other embodiments, the pole piece elements are positioned on opposite sides of the shaft. In this arrangement the target preferably comprises a plurality of ferrous target elements so that the first pole piece is adjacent to a different ferrous target element to the second pole piece at any given moment in time.

The first magnetic probe assembly may comprises more than two pole piece elements positioned adjacent the target. The pole pieces may be spaced circumferentially around the target.

The system may comprise a second magnetic probe assembly positioned adjacent the shaft, axially spaced from the first magnetic probe assembly and wherein the system is configured to compare an output from the first magnetic probe assembly with an output from the second magnetic probe assembly to determine shaft breakage. In particular the output signals from the two probe assemblies may be compared to determine if there is any change in the relative phase of the output signals indicative of shaft breakage.

In a second aspect, there is provided a gas turbine engine comprising a sensing system according to the first aspect of the invention.

In a third aspect, there is provided a method of determining rotational speed of a shaft, the shaft having a target fixed to the shaft, the target comprising at least one ferrous target element radially spaced from the shaft comprising: providing a first magnetic probe and a second magnetic probe, wherein the first magnet probe and the second magnetic probe are radially spaced from one another so that the at least one ferrous target element passes proximate to the first and second magnetic probes as the target rotates and so that radial movement of a ferrous target element away from one of the first and second pole magnetic probe results in corresponding movement of a ferrous target element towards the other of the first and second magnetic probes, and combining an output from the first magnetic probe with an output of the second magnetic probe to provide a combined output signal from which the rotational speed of the shaft can be determined.

The output from the first magnetic probe may be summed with the output of the second magnetic probe to provide the combined output signal, The method may further comprise comparing the combined output signal with an output signal from another speed sensor to determine if the shaft has broken. The method may further comprise shutting off a fuel supply if the shaft is determined to be broken.

Embodiments of the invention will now be described, by way of example only, with reference to the accompanying drawings, in which:
Figure 1 is a schematic illustration of a speed sensing and shaft breakage detection system in a gas turbine engine;
Figure 2 is a schematic illustration of a variable reluctance sensor;
Figure 3 illustrates an output signal from a variable reluctance sensor as shown in Figure 2 when the shaft is rotating eccentrically;
Figure 4a is a schematic perspective view of a sensing system in accordance with a first embodiment of the invention;
Figure 4b is a schematic cross-section of the system shown in Figure 4a;
Figure 5 illustrates the output signals from each of the magnetic probes in Figures 4a and 4b, and a combined output signal;
Figure 6a is a schematic perspective view of a sensing system in accordance with a second embodiment of the invention;
Figure 6b is a schematic cross-section of the system shown in Figure 6a;
Figure 7a is a schematic perspective view of a sensing system in accordance with a third embodiment of the invention;
Figure 7b is a schematic cross-section of the system shown in Figure 7a;
Figure 8a is a schematic perspective view of a sensing system in accordance with a fourth embodiment of the invention; and
Figure 8b is a schematic cross-section of the system shown in Figure 8a.

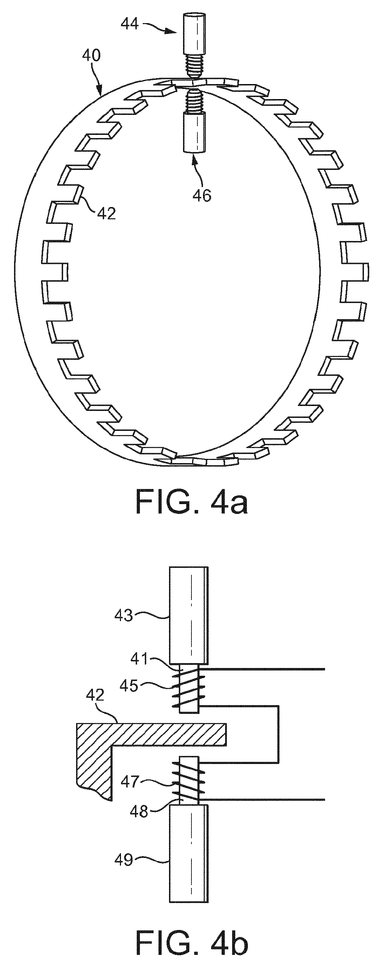

Figure 4a illustrates a first embodiment of the invention. Figure 4a illustrates a target in the form of a phonic wheel 40 having a plurality of axially extending ferrous teeth 42 around the circumference. The phonic wheel is fixed to a rotating shaft (not shown but as illustrated in Figure 1) so that the teeth 42 travel along a circular path. Two VR probes 44, 46 are on the same side of the shaft but on opposite sides of the path of the ferrous teeth. The two probes 44, 46 are spaced apart, but aligned, in a radial direction so that each tooth passes between the two probes as the wheel 40 rotates. This means that if, as a result of eccentric rotation of the shaft, the teeth move towards one of the probes they will correspondingly and simultaneously move away from the other of the probes.

Figure 4b is a schematic cross section of the arrangement of Figure 4a in the vicinity of the VR probes. Each of the probes comprises a permanent magnet 43, 49 a pole piece 41, 48 and a coil 45, 47 would around the respective pole piece. As shown in Figure 4b the coils 41, 48 are connected to each other in series. However, as explained, other ways of combining the outputs of each of the coils may used, such as parallel connection or a combining of the output signals within signal processing circuitry.

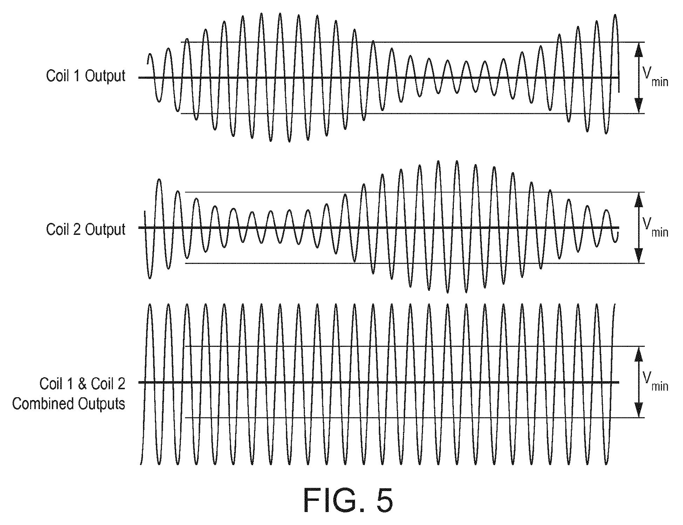

Figure 5 shows the output from each of the coils during an eccentric rotation of the wheel and the combined output of the two coils connected in series. As the wheel rotates eccentrically the teeth may first move closer to the first pole piece 41 causing an increase in the voltage induced in the coil 45 (labelled coil 1 in Figure 5). At the same time the teeth move further from the second pole piece 48, causing a decrease in the voltage induced in coil 47 (labelled coil 2 in Figure 5). Then the teeth move further from the first coil causing a decrease in voltage induced in coil 1 and, at the same time, closer to coil 2 causing an increase in voltage induced in coil 2.

Also shown in Figure 5 is the minimum peak-to-peak voltage Vₘᵢₙ required for a reliable speed measurement to be made. It can be seen that at times the output from both coil 1 and coil 2 is insufficient for a reliable speed measurement. However, it can also be seen that using the combined output of coil 1 and coil 2, as result of connecting them in series, it always possible to obtain a reliable speed measurement even when the wheel is rotating eccentrically.

The arrangement illustrated in Figure 4a and 4b can be used in a shaft breakage detection system as illustrated in Figure 1. By ensuring that a reliable speed reading is obtained at both ends of the shaft, shaft breakage can be determined very quickly. In particular, using an arrangement as shown in Figure 4a and 4b in a system as shown in Figure 1 will provide a much quicker response than a system using detection of eccentric rotation of the shaft as an indicator of shaft breakage.

It is possible that an over-speed protection system could just monitor the turbine shaft speed using an assembly as shown in Figure 4a and 4b, not making a comparison with the compressor speed. But this is likely to give a slower system response time for shaft breakage detection than a system shown in Figure 1.

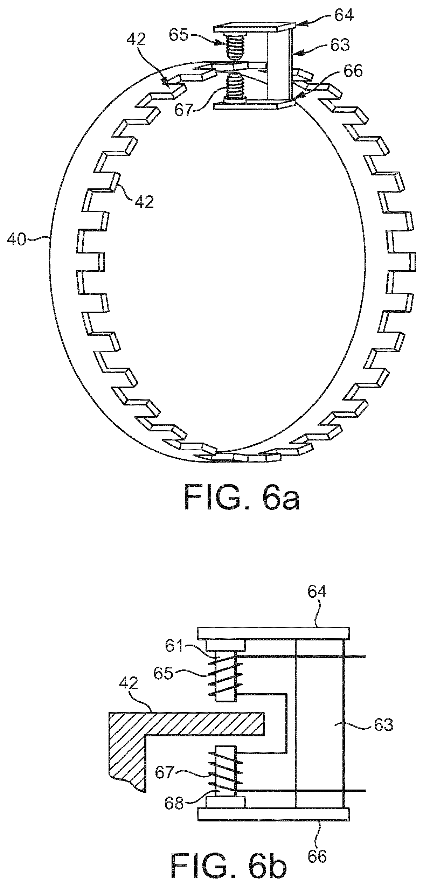

There are several alternatives to the arrangement shown in Figure 4a and 4b that use the same underlying principle to compensate for eccentric rotation of the wheel. Figures 6a and 6b illustrate a sensing system in accordance with a second embodiment of the invention. The sensing system of Figures 6a and 6b is very similar to that shown in Figures 4a and 4b, the difference being that in the system of Figure 6a and 6b the VR probes share a common permanent magnet.

Figure 6a illustrates a phonic wheel 40 having a plurality of axially extending teeth 42 around the circumference. The phonic wheel is fixed to a rotating shaft (not shown but as illustrated in Figure 1) so that the teeth 42 travel along a circular path. Two VR probes are on the same side of the shaft but on opposite sides of the path of the ferrous teeth in the same manner as shown in Figure 4a and Figure 4b. The two probes are spaced apart, but aligned, in a radial direction so that each tooth passes between the two probes as the wheel 40 rotates. This means that if, as a result of eccentric rotation of the shaft, the teeth move towards one of the probes they will correspondingly move away from the other of the probes.

Figure 6b is a schematic cross section of the arrangement of Figure 6a in the vicinity of the VR probes. Each of the probes comprises a pole piece 61, 68 and a coil 65, 67 wound around the respective pole piece. Each of the pole pieces 61, 68 has a pole extension 64, 66 formed from a ferrous material which is in contact with a shared permanent magnet 63. As shown in Figure 6b the coils 61, 68 are connected to each other in series in the same manner as described with reference to Figure 4b.

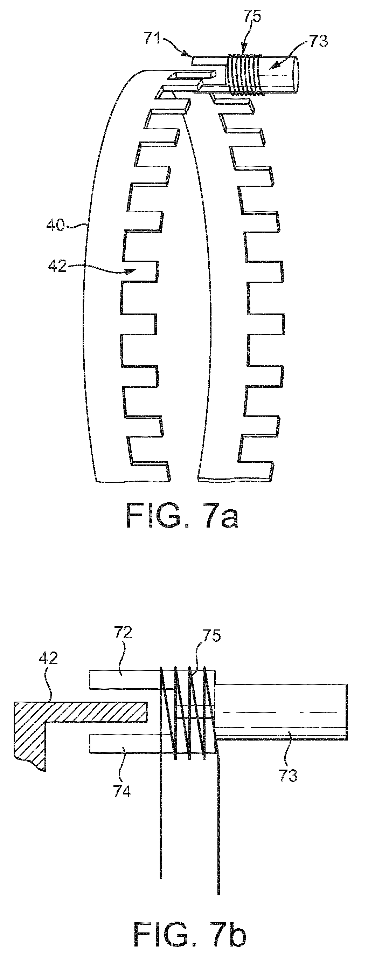

Figures 7a and 7b illustrate a sensing system in accordance with a third embodiment of the invention. In the embodiment of Figure 7a and 7b a single VR probe is used, with a slot in the pole piece 71 through which the teeth of the phonic wheel pass. The pole piece then has two pole piece elements 72, 74 positioned on either side of the path of the ferrous teeth on the phonic wheel. This is clearly shown in Figure 7b.

The two pole piece elements 72, 74 are spaced apart, but aligned, in a radial direction so that each tooth passes in the slot between the two pole piece elements as the wheel 40 rotates. This means that if, as a result of eccentric rotation of the shaft, the teeth move towards one of the pole piece elements they will correspondingly move away from the other of the pole piece elements. A permanent magnet 73 abuts the pole piece 71 and a single coil 75 is wound around the pole piece 71. So, in the arrangement of Figure 7a and 7b, rather than having two probes connected in series, a single probe is used with a split pole piece. The peak-to-peak voltage induced in the coil 75 remains relatively stable even during eccentric rotation of the wheel because the reluctance of the magnetic field passing through the pole piece is not significantly altered by the position of a ferrous tooth in the slot between the pole piece elements, only by the presence or absence of a ferrous tooth.

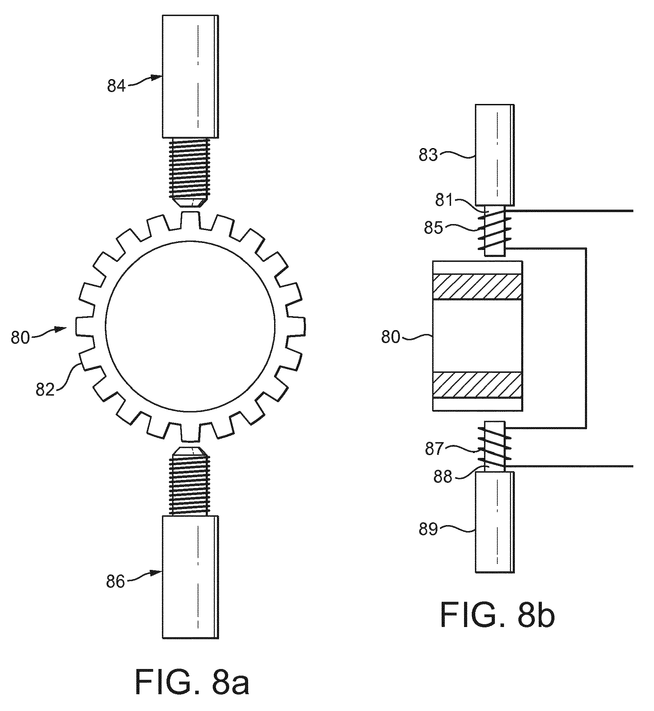

Figure 8a is a schematic perspective view of a sensing system in accordance with a fourth embodiment of the invention. Figure 8b is a schematic cross-section of the system shown in Figure 8a. In the system of Figure 8a the phonic wheel 80 is a gear type wheel with the ferrous teeth 82 extending in a radial direction rather than in an axial direction. The phonic wheel is fixed to a rotating shaft (not shown but as illustrated in Figure 1) so that the teeth 82 travel along a circular path. Two VR probes 84, 86 are positioned on opposite sides of the shaft and wheel 80. The two probes 84, 86 are aligned in a radial direction (in other words they are diametrically opposed across the wheel) so that if, as a result of eccentric rotation of the shaft, the teeth move towards one of the probes they will correspondingly move away from the other of the probes.

Figure 8b is a schematic cross section of the arrangement of Figure 8a. Each of the probes comprises a permanent magnet 83, 89 a pole piece 81, 88 and a coil 85, 87 would around the respective pole piece. As in the arrangement of Figure 4b the coils 85, 87are connected to each other in series. The system of Figure 8a and 8b operates on the same principle as described with reference to Figures 4a and 4b, but with a different geometric arrangement.

It is of course possible to have other arrangement of probes or pole piece elements that exploit the same principles, and the embodiments described are examples only. For example, the arrangement of Figure 8a could be adapted to include further pairs of VR probes arranged around the circumference of the wheel 80, with all of the coils connected in series or their outputs combined in another way.

## Claims

1. A sensing system for sensing rotational speed of a shaft in a gas turbine engine, comprising:
a target, the target fixed to the shaft in use, the target comprising at least one ferrous target element radially spaced from the shaft;
a first magnetic probe assembly comprising a first pole piece element and a second pole piece element, wherein the first pole piece element and the second pole piece element are radially spaced from one another so that the at least one ferrous target element passes proximate to and between the first and second pole piece elements as the target rotates, so that radial movement of the at least one ferrous target element away from one of the first and second pole piece elements results in simultaneous and corresponding radial movement of the at least one ferrous target element towards the other of the first and second pole piece elements.

2. A sensing system according to claim 1, wherein the first magnetic probe assembly comprises one or more variable reluctance sensors.

3. A sensing system according to claim 1 or claim 2, wherein the first magnetic probe assembly comprises a plurality of magnetic probes, wherein each of the first and second pole piece elements is part of a separate magnetic probe.

4. A sensing system according to claim 3, wherein an output of each of the plurality of magnetic probes is combined to provide a measure of the rotational speed of the shaft.

5. A sensing system according to claim 3 or 4, wherein each probe comprises a coil wound around the pole piece element.

6. A sensing system according to claim 5, wherein the coils are connected to one another in series.

7. A sensing system according to claim 1 or 2, wherein the first and second pole piece elements are part of a single pole piece.

8. A sensing system according to claim 7, wherein the magnetic probe comprises a coil wound around the pole piece.

9. A sensing system according to any preceding claim, wherein the target comprises a wheel and wherein the at least one ferrous target element comprises at least one ferrous tooth on the wheel.

10. A sensing system according to any preceding claim, wherein the at least one ferrous target element extends in an axial direction away from a body of the target and the first and second pole piece elements are positioned on a same side of the shaft as each other and such that the at least one ferrous target element passes between the first and second pole piece elements as the target rotates.

11. A sensing system according to any one of claims 1 to 9, wherein the pole piece elements are positioned on opposite sides of the shaft.

12. A sensing system according to any preceding claim, wherein the first magnetic probe assembly comprises more than two pole piece elements positioned adjacent the target.

13. A sensing system according to any preceding claim comprising a second magnetic probe assembly positioned adjacent the shaft, axially spaced from the first magnetic probe assembly and wherein the system is configured to compare an output from the first magnetic probe assembly with an output from the second magnetic probe assembly to determine shaft breakage.

14. A gas turbine engine comprising a sensing system according to any one of the preceding claims.

15. A method of determining rotational speed of a shaft, the shaft having a target fixed to the shaft, the target comprising at least one ferrous target element radially spaced from the shaft comprising:
providing a first magnetic probe and a second magnetic probe, wherein the first magnet probe and the second magnetic probe are radially spaced from one another so that the at least one ferrous target element passes proximate to and between the first and second magnetic probes as the target rotates so that radial movement of the at least one ferrous target element away from one of the first and second pole magnetic probe results in simultaneous and corresponding movement of the at least one ferrous target element towards the other of the first and second magnetic probes,
combining an output from the first magnetic probe with an output of the second magnetic probe to provide a combined output signal; and
determining the rotational speed of the shaft from the combined output signal.
